# EUROPÄISCHE PATENTANMELDUNG

(11) **EP 4 455 073 A1**
(43) Veröffentlichungstag der Anmeldung: **30.10.2024**
(21) Anmeldenummer: 24170774.4
(22) Anmeldetag: 17.04.2024
(51) Int. Cl.: B66C 1/12, F16G 11/10, F16G 11/14

(54) **TEXTILES ANSCHLAGMITTEL**

(30) Priorität: 28.04.2023 DE 202023000946 U
(71) Anmelder: Span Set Gesellschaft für Transportsysteme und technische Bänder mit beschränkter Haftung & Co. Kommanditgesellschaft, 52531 Übach-Palenberg (DE)
(72) Erfinder: Kappel, Julius, 51143 Köln (DE); Heinze, Thorsten, 09114 Chemnitz (DE); Streubel, Peter, 09212 Limbach-Oberfrohna (DE)
(74) Vertreter: Taubert, Diana

(57) **Zusammenfassung**

Die Erfindung betrifft ein biegeschlaffes, textiles Anschlagmittel (1) zum Heben von Lasten, insbesondere zum Einsatz bei Gehängen zum Heben asymmetrischer Lasten, so beispielhaft Mehrstranggehängen mit mindestens einem Verkürzer, der die Einstellung einer definierten Verkürzungslänge gewähren kann oder auch einem Einstranggehänge, dessen Länge veränderbar ist gemäß Hauptanspruch 1.

## Beschreibung

Die Erfindung betrifft ein biegeschlaffes, textiles Anschlagmittel zum Heben von Lasten, insbesondere zum Einsatz bei Gehängen zum Heben asymmetrischer Lasten, so beispielhaft Mehrstranggehängen mit mindestens einem Verkürzer, der die Einstellung einer definierten Verkürzungslänge gewähren kann oder auch einem Einstranggehänge, dessen Länge veränderbar ist.

Derartige Vorrichtungen sind seit langem bekannt und werden zum Transport von asymmetrischen Lasten eingesetzt, wobei mindestens ein sogenannter Verkürzer zum Einsatz kommt. Der mindestens eine Verkürzer dient dazu, bei asymmetrischen Lasten, die unterschiedlich lange biegeschlaffe Anschlagmittel fordern, eine Anpassung dieser zu gewähren, damit die asymmetrische Last normgerecht gehandhabt werden kann, um beispielhaft einen im Wesentlichen waagerechten Transport sicherzustellen.

Transport im Sinne der Erfindung ist sowohl ein Transport in vertikaler Richtung, als auch ein Transport in horizontaler Richtung.

Bei bekannten Kettengehängen, sogenannten Mehrstranggehängen, lässt sich eine Verkürzung der Länge eines Kettenstrangs durch Verkürzungsklauen realisieren. Diese Lösung scheidet bei textilen Anschlagmitteln aus. Eine Verkürzung erfolgt bei textilen Anschlagmitteln beispielhaft durch eine ringförmige Ausgestaltung des biegeschlaffen Anschlagmittels oder durch im Anschlagmittel vorhandene Schlaufen. Dies gewährt jedoch keine stufenlose Einstellung.

Eine stufenlose Einstellung ist nur durch ein Anschlagseil mit einer Schlinge mit einem einstellbaren Spleiß als Verkürzer gewährbar, wie dies aus der DE 20 2015 007 686 U1 hervorgeht.

Bei dem Einsatz einer solchen Schlinge mit einem selbsthemmenden Spleiß hat sich gezeigt, dass die Durchstecklänge des Anschlagseils im Spleiß relativ lang ausgestaltet sein muss, was bei der Handhabe nachteilig ist. Darüber hinaus stellt die einstellbare Spleißverbindung eine Schwachstelle des Anschlagmittels dar.

Aufgabe der Erfindung ist es, dass vorerwähnte biegeschlaffe textile Anschlagmittel in Form eines textilen Seiles mit einem einstellbaren Spleiß weiterzubilden und zu optimieren.

Diese Aufgabe wird erfindungsgemäß durch ein biegeschlaffes textiles Anschlagmittel mit den Merkmalen des Hauptanspruchs 1 gelöst, wobei die Unteransprüche weitere erfindungsgemäße Ausgestaltungs- varianten dieser Lösungen beinhalten.

Danach ist das erfindungsgemäße biegeschlaffe textile Anschlagmittel in Form eines textilen Seiles wie folgt ausgestaltet.

Das biegeschlaffe textile Anschlagmittel fungiert als Anschlagstrang mit einem ersten freien Ende, an dem ein erstes Tragmittel unverlierbar, beispielhaft mittels eines festen Spleißes, angeordnet ist und einem weiteren freien Ende. Der Anschlagstrang bildet mittels eines einstellbaren und in Zugrichtung selbsthemmenden Spleißes eine Schlinge. Die Schlinge, so das biegeschlaffe textile Anschlagmittel, durchquert das erste Tragmittel, wobei das erste Tragmittel beweglich und unverlierbar in der Schlinge angeordnet ist. Somit durchläuft der Anschlagstrang das erste Tragmittel im Rahmen der Bildung der Schlinge, sodass ein Spiel zwischen dem ersten Tagmittel und dem Anschlagstrang besteht, das eine Längenveränderung des Anschlagstrangs mittels des einstellbaren Spleißes ermöglicht. Das erste Tagmittel nimmt dabei den Anschlagstrang schlingenseitig, jedoch funktionssicher auf. Des Weiteren weist der Anschlagstrang einen Reserveabschnitt auf, der sich an einem Seilauslass des einstellbaren Spleißes anschließt, sich in Richtung des weiteren freien Endes des Anschlagstrangs erstreckt, in einer Variante bis zu dem weiteren freie Ende des Anschlagstrangs erstrecken kann und eine Längenreserve bildet, um die Länge des biegeschlaffen textilen Anschlagmittels sicher variieren zu können. Wobei der Reserveabschnitt erfindungsgemäß nur soweit an das weitere freie Ende des Anschlagstrangs heranreicht, dass eine funktionsgerechte Bedienung des Anschlagmittels noch möglich ist.

Darüber hinaus weist das weitere freie Ende des Anschlagstrangs eine Auszugsicherung auf, so beispielhaft eine Verdickung, also eine Vergrößerung des Umfangs des Anschlagstrangs.

Ebenfalls kann vorgesehen werden, dass der Anschlagstrang mindestens ein weiteres Tragmittel aufweist, das wie das erste Tragmittel beweglich und unverlierbar an der Schlinge angeordnet ist. Es ist aber nicht mit dem Anschlagstrang ohne Gewährung einer Relativbewegung der Bauteile zueinander verbunden und daher frei beweglich.

Das erste Tragmittel und das mindestens eine weitere Tragmittel können beispielhaft als Haken oder Ring ausgestaltet sein, um an eine Last und/oder eine Transportvorrichtung, wie einen Kran, anordenbar zu sein, so beispielhaft auch als textiler Ring. Aber auch nur mit dem ersten Tragmittel allein kann das erfindungsgemäße Anschlagmittel funktionsgerecht eingesetzt werden, da die Schlinge selbst an eine Last oder eine Transportvorrichtung, so einen Haken eines Krans, anordenbar ist.

In vorteilhafter Weise ist das erste freie Ende des Anschlagstrangs an einem inneren Bereich des ersten Tragmittels angeordnet, um eine leichte Bedienung im Bereich der anzuschlagenden Last zu ermöglichen.

Darüber hinaus ist vorteilhafterweise das Verhältnis der Einstecklänge des einstellbaren Spleißes zum Durchmesser des Anschlagstrangs kleiner gleich 40. Es ist somit unterhalb der nach dem bisherigen Stand der Technik möglichen Einstecklänge gelegen.

Das erfindungsgemäße biegeschlaffe textile Anschlagmittel weist verschiedene Vorteile auf. Bei bekannten Anschlagseilen ist nur der verlängerte Teil des Anschlagmittels als Doppelstrang ausgeführt, während bei der vorliegenden Erfindung das gesamte Anschlagmittel als doppelsträngige Konstruktion ausgebildet ist. Somit verdoppelt sich die Traglast gegenüber bekannten Anschlagseilen.

Zudem gewährt die Konstruktion eine wesentlich geringere Einstecklänge, so zum Beispiel eine um circa 50 Prozent geringere Einstecklänge des einstellbaren Spleißes, als dies bei dem im Stand der Technik beschriebenen Halteseil der Fall ist. Bei derartigen Anschlagseilen mit verstellbarem Spleiß müssen nämlich Einsteckspleiße verwendet werden, die eine größere Einstecklänge benötigen, um ein Durchrutschen unter Last zu vermeiden. Des Weiteren hängt der Reibschluss der Spleißverbindung maßgeblich von der Sorgfalt des Bedieners ab. Wird der Spleiß nicht richtig straff gezogen, besteht die Gefahr des Durchrutschens.

Durch die erfindungsgemäße Konstruktion wirkt der Spleiß ähnlich einem Keilschloss, das sich mit zunehmender Zuglast immer straffer festzieht. Somit ist die Sicherheit bei der Handhabe des Anschlagmittels gegeben.

Dadurch, dass das erfindungsgemäße Anschlagmittel zwei lasttragende Stränge aufweist, können diese gegenüber dem im Stand der Technik beschriebenen Anschlagseil bei Bedarf einen geringeren Durchmesser aufweisen.

Die vorab genannten beiden Vorteile gewähren dabei die geringere Einstecklänge. Ein weiterer Vorteil besteht darin, dass das biegeschlaffe Anschlagmittel aufgrund des geringeren Durchmessers ebenfalls ein geringeres Gewicht aufweisen kann, was bei der Handhabe Vorteile bietet.

Ebenfalls ist aufgrund des deutlich kürzeren einstellbaren Spleißes und der Möglichkeit, das mindestens eine weitere Tragmittel entfallen zu lassen, eine kürzere Mindestlänge der Vorrichtung realisierbar. Bei einem Entfallen des mindestens einen weiteren Tragmittels, das, wie gesagt, nicht notwendigerweise eingesetzt werden muss, wird das Gewicht weiter reduziert und es können die Kosten der Vorrichtung reduziert werden.

Die Erfindung wird nachfolgend anhand eines Ausführungsbeispiels unter Bezugnahme auf die Figur weiter erläutert. Dabei ergeben sich weitere Vorteile, Merkmale und Ausgestaltungen der Erfindung.

Es zeigen:
**Fig. 1** eine schematische Darstellung des erfindungsgemäßen biegeschlaffen textilen Anschlagmittels,
**Fig. 2** eine weitere schematische Darstellung des erfindungsgemäßen biegeschlaffen textilen Anschlagmittels.

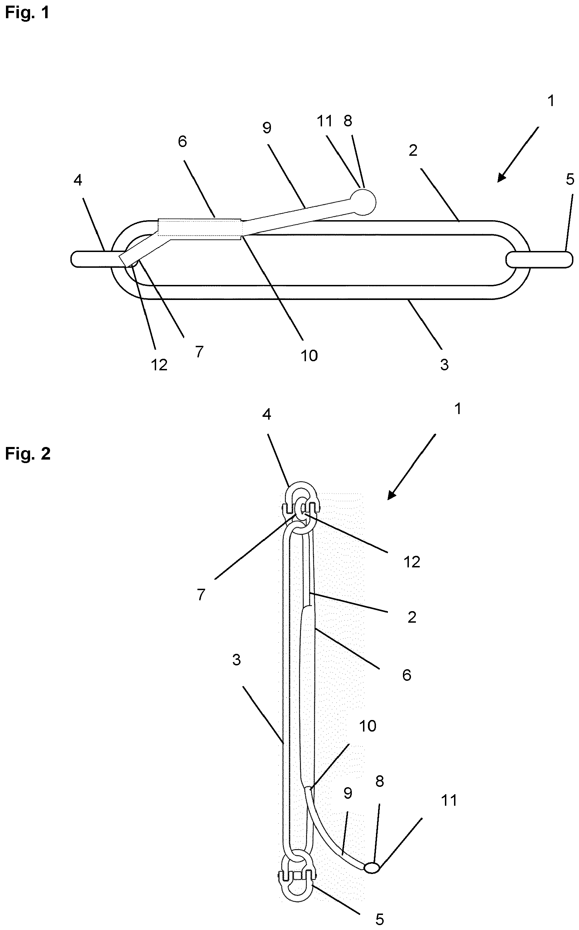

Im Ausführungsbeispiel fungiert das erfindungsgemäße biegeschlaffe textile Anschlagmittel **1,** wie in **Fig. 1 und 2** dargestellt, als Anschlagstrang **3** mit einem ersten freien Ende **7,** an dem ein erstes Tragmittel **4** unverlierbar, im Ausführungsbeispiel mittels einer festen Spleißverbindung, angeordnet ist, der in **Fig. 1 und 2** nicht gesondert abgebildet ist. Der Anschlagstrang **3** bildet mittels eines einstellbaren und in Zugrichtung selbsthemmenden Spleißes **6** eine Schlinge **2.** Die Schlinge **2,** nämlich das biegeschlaffe textile Anschlagmittel **1,** durchquert das erste Tragmittel **4,** wobei das erste Tragmittel **4** beweglich und unverlierbar in der Schlinge **2** angeordnet ist. Der Anschlagstrang **3** durchläuft dabei das erste Tragmittel **4** im Rahmen der Bildung der Schlinge **2,** sodass ein Spiel zwischen dem ersten Tagmittel **4** und dem Anschlagstrang **3** in Form der Schlinge **2** besteht.

Des Weiteren weist der Anschlagstrang **3** einen Reserveabschnitt **9** auf, der sich an einem Seilauslass **10** des einstellbaren Spleißes **6** anschließt und eine Längenreserve bildet, um die Länge des biegeschlaffen textilen Anschlagmittels **1** sicher variieren zu können. Das erste Tragmittel **4** ist im Ausführungsbeispiel ein Haken, der beispielhaft an einem Anschlagpunkt einer zu transportierenden Last angelegt werden kann. Ferner weist das Anschlagmittel **1** im Ausführungsbeispiel ein weiteres Tragmittel **5** auf, das frei beweglich und unverlierbar in der Schlinge **2** angeordnet ist. Das weitere Tragmittel **5** ist ein Ring zur Anordnung an einen Kranhaken.

Das Verhältnis der Einstecklänge des einstellbaren Spleißes **6** zum Durchmesser des Anschlagstrangs **3** ist im Ausführungsbeispiel 40 zu 1. Ebenfalls weist der Anschlagstrang **3** ein weiteres freies Ende **8** auf, das eine Auszugsicherung **11** aufweist. Im Ausführungsbeispiel ist die Auszugsicherung **11** als knotenartige Verdickung ausgebildet.

Das erste freie Ende **7** des Anschlagstrangs **3** ist im Ausführungsbeispiel an einem inneren Bereich **12** des ersten Tragmittels **4** angeordnet. Dies gewährt eine leichte Bedienung im Bereich einer an dem ersten Tragmittel **4** anzuschlagenden Last. Das so bereitgestellte biegeschlaffe textile Anschlagmittel **1** ist als Doppelstrangkonstruktion ausgebildet, was zu einer erhöhten Traglast gegenüber den bisher bekannten Vorrichtungen, wie sie aus dem vorgenannten Stand der Technik bekannt sind, führt.

### Bezugszeichenliste

1. Anschlagmittel
2. Schlinge
3. Anschlagstrang
4. erstes Tragmittel
5. weiteres Tragmittel
6. Spleiß
7. erstes freies Ende
8. weiteres freies Ende
9. Reserveabschnitt
10. Seilauslass
11. Auszugsicherung
12. innerer Bereich

## Patentansprüche

1. Biegeschlaffes textiles Anschlagmittel (1) in Form eines textilen Seiles als Anschlagstrang (3) mit einem ersten freien Ende (7), an dem ein erstes Tragmittel (4) unverlierbar angeordnet ist und einem weiteren freien Ende (8), der Anschlagstrang (3) mittels eines einstellbaren und in Zugrichtung selbsthemmenden Spleißes (6) eine Schlinge (2) bildet, die Schlinge (2) das erste Tragmittel (4) durchquert und das erste Tragmittel (4) beweglich und unverlierbar in der Schlinge (2) angeordnet ist und der Anschlagstrang (3) einen Reserveabschnitt (9) aufweist, der sich an einem Seilauslass (10) des einstellbaren Spleißes (6) anschließt und sich in Richtung des weiteren freien Endes (8) des Anschlagstrangs (3) erstreckt.

2. Anschlagmittel (1) nach Anspruch 1, wobei der Anschlagstrang (3) mindestens ein weiteres Tragmittel (5) aufweist, das beweglich und unverlierbar an der Schlinge (2) angeordnet ist.

3. Anschlagmittel (1) nach Anspruch 1 oder 2, wobei das erste freie Ende (7) des Anschlagstrangs (3) an einem inneren Bereich (12) des ersten Tragmittels (4) angeordnet ist.

4. Anschlagmittel (1) nach einem der vorherigen Ansprüche, wobei das weitere freie Ende (8) des Anschlagstrangs (3) eine Auszugsicherung (11) aufweist.

5. Anschlagmittel (1) nach einem der vorherigen Ansprüche, wobei das Verhältnis der Einstecklänge des einstellbaren Spleißes (6) zum Durchmesser des Anschlagstrangs (3) kleiner gleich 40 ist.

6. Anschlagmittel (1) nach einem der Ansprüche 2 bis 5, wobei das erste Tragmittel (4) und das mindestens eine weitere Tragmittel (5) als Haken oder Ring gestaltet sind.
